(19) Europäisches Patentamt / European Patent Office / Office européen des brevets

(11) **EP 2 261 856 A2**

(12) **EUROPEAN PATENT APPLICATION**

(43) Date of publication:
**15.12.2010 Bulletin 2010/50**

(51) Int Cl.:
*G06T 7/00* (2006.01)

(21) Application number: **10165218.8**

(22) Date of filing: **08.06.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO SE SI SK SM TR**<br>Designated Extension States:<br>**BA ME RS**<br><br>(30) Priority: **08.06.2009 EP 09007563**<br><br>(71) Applicant: **Siemens Aktiengesellschaft**<br>**80333 München (DE)** | (72) Inventors:<br>• **Feiten, Wendelin**<br> **85579 Neubiberg (DE)**<br>• **Atwal, Pradeep**<br> **deceased (DE)**<br>• **Eidenberger, Robert**<br> **4040 Lichtenberg (AT)**<br>• **Grundmann, Thilo**<br> **81541 München (DE)** |

(54) **Method for modelling and calculation of the uncertainty of a pose of an object in space**

(57)    The invention relates to a method for modelling and calculation of the uncertainty of a pose of an object in space, wherein pose is a combination of translation and orientation, comprising the following steps:
- describing of a three-dimensional orientation of the object by unit quaternions,
- inducing a probability density function on the unit quaternions by central projection of a Gaussian distribution on a tangent space to the sphere of the unit quaternions,
- forming of base elements describing a correlation of position and orientation by generating a joint probability on a product space of said tangent space and a space of translations, and
- combining said base elements to mixture probability distributions.

    The memory space requirements of the inventive method to model the possible poses are significantly lower than those of a sample based description. The inventive method is usable mobile robots, CT imaging, logistics equipment and mineralogical investigations and explorations.

## Description

The invention relates to a method for modelling and calculation of the uncertainty of a pose of an object in space.

Basis for the invention is the problem of modeling the position and orientation (pose) of an object or some other physical phenomenon in the three-dimensional space. The technical use cases for such modeling methods are manifold:

- environment recognition for technical systems, e.g. intelligent robots,
- navigation of mobile systems, like autonomous robots, in a similar way for terrestrial vehicles, aircrafts, ships or spacecrafts,
- description of electrical or magnetic fields, e.g. the magnetic field of the earth, and
- description of the structure of (partly) crystalline materials

A particular use case would be a robot, which tries to determine the pose of an object. It makes several independent localization attempts (e.g. with different methods or under different conditions) and measures the uncertainty of each one according to a known measurement model. The resulting pose and uncertainty should reflect all independent localization attempts.

A concrete use case would be a robot, which has to grab an object. To decrease execution time, it uses a first localization and a known uncertainty resulting from its own movement to get an estimate of a new relative uncertainty resulting from its own movement for a faster second localization attempt (e.g. using region of interest) and as a basis for data fusion.

The description of position and orientation is comparatively easy as they are completely known. It becomes more difficult if position and orientation are only known up to some uncertainty, i.e. if only some probability density function of position and orientation can be given. The joint information of position and orientation will be named by the term "pose" in the following.

This is e.g. the case if by some measurement initially only very insufficient information concerning the pose can be obtained. For example, if an edge of a cuboid object is located in an image, there are many possible poses of the object that are compatible with this sensor measurement. In order to register this information in the system and to be able to process it later on, a suitable description of these possible poses is required.

Especially, it is necessary to be able to model the correlation between position and orientation in the set of possible poses.

As a basic tool in robotic perception, probability density functions of 6-dimensional (6D) poses (combinations of position and orientation) need to be represented. In order to be able to represent and process weak information from imperfect sensors, widely spread densities need to be covered by the representation and the inference mechanisms. The more critical part in the representation of a rigid transform is the rotation. The following requirements concerning the parameterization of the rotation are contradictory, but a design goal is to satisfy them as well as possible:

- Unique: There should be only one representation for each orientation.
- Minimal: The rotation should be represented with few parameters.
- Composable: There should be an easy way to derive the parameters of the composed rotation from the parameters of two rotations in the composition.
- Smooth: The rotation should be an at least continuous, or better still a differentiable function of the parameters.
- Distance and area preserving: Properties like areas or distances in the parameter space should be preserved under rigid transform. This is important when we deal with probability density functions over the rotations or transforms.

The formalism for a probability density function (pdf) of the 6D poses should satisfy the following properties:

- Coordinate System Independent: A coordinate change should only change the arguments to the pdf, not the structure or the parameters of the pdf.
- Information Fusion: The formalism supports the fusion of two probability density information (for example maximum likelihood estimation).
- Information Propagation: The formalism supports the propagation of uncertain information (i.e. a pose estimate) through an uncertain transform.
- The representation of the pdf uses not too many parameters, much fewer than for example a particle set.

Since each position and orientation with regard to a given coordinate system is the result of a translation and a rotation. Position and Translation can be and will be used synonymously in the following, as well as orientation and rotation. Also, pose and (rigid) transform are used synonymously.

There are various approaches to the parametrization of rigid transforms and corresponding probability density functions. None of them fulfils all requirements listed above.

The representation of rigid transforms, and especially of orientation, in 3D is a central issue in a variety disciplines of arts, science and engineering, and contributions from various disciplines are available. The most popular representations of a 3D rotation are rotation matrix, Euler angles, Rodrigues vector and unit quaternions. For rotation matrices, renormalization is difficult, Euler angles are not invariant under transforms and have singularities, and Rodrigues vectors do not allow for an easy composition algorithm.

Stuelpnagel, J.: "On the Parametrization of the Three-Dimensional Rotation Group", SIAM Review, Vol. 6, No. 4, pp. 422-430, 1964, points out that unit quaternions are a suitable representation of rotations in 3D with few parameters, but does not provide probability distributions.

Choe, S.B.: "Statistical Analysis of Orientation Trajectories via Quaternions with Applications to Human Motion", PhD Dissertation, University of Michigan, 2006, represents the probability distribution of rotations via a projected Gaussian on a tangent space. However, he only deals with concentrated distributions, and he does not take translations into account.

Goddard, J.S.: "Pose and Motion Estimation from Vision using Dual Quaternion-based Extended Kalman Filtering", PhD Dissertation, University of Tennessee, Knoxville 1997, and Abidi, M.A., Goddard J.S.: "Pose and Motion Estimation from Vision using Dual Quaternion-based Extended Kalman Filtering", Proc. of SPIE Conf. on Three-Dimensional Image Capture and Applications, Vol. 3313, pp. 189-200, San Jose, CA, January 1998, use dual quaternions for motion tracking. They also capture the correlation between rotation and translation. The probability distribution over the parameters of the state model is a uni-modal normal distribution. This is an appropriate model if the initial estimate is sufficiently certain, and if the information that is to be fused to the estimate is sufficiently well focused. Dual quaternions provide a closed form for the composition of rigid transforms, similar to the transform matrix in homogeneous coordinates (see also Kavan, L. et al.: "Dual Quaternions for Rigid Transformation Blending", Technical Report, 2006).

Antone, M.E.: "Robust Camera Pose Recovery Using Stochastic Geometry", PhD Dissertation, Massachusetts Institute of Technology, 2001, suggests to use the Bingham distribution in order to represent weak information. However, he does not give a practical algorithm for fusion of information or propagation of uncertain information.

Also, Love, J.J.: "Bingham statistics", Encyclopedia of Geomagnetism and Paleomagnetism, 45-47, Springer, Dordrecht, The Netherlands, pp. 45-47, 2007, states that the renormalization of the Bingham distribution is computationally expensive. Furthermore, it is not disclosed how the Bingham distribution for rotations could be extended to rigid transforms.

Mardia, K.V. et al.: "Protein Bioinformatics and Mixtures of Bivariate von Mises Distributions for Angular Data", Biometrics, Volume 63, Number 2, pp. 505-512, 2007, use a mixture of bivariate von Mises distributions. They fit the mixture model to a data set using the expectation-maximization (EM) algorithm. This allows for modeling widely spread distributions. However, they do not treat translations.

In general, the Jacobian is used to propagate the covariance matrix of a random variable through a non-linear function. Kraft, E.: "A Quaternion-based Unscented Kalman Filter for Orientation Tracking", Proceedings of the Sixth International Conference of Information Fusion, Vol. 1, pp. 47-54, 2003, use an unscented Kalman Filter.

It is an object of the present invention to specify a method for modelling and calculation of an uncertainty of position and orientation (pose) of an object in space with reduced memory space requirements.

This object is achieved by a method in accordance with the claims.

Accordingly, the inventive method for modelling and calculation of the uncertainty of a pose of an object in space, wherein pose is a combination of translation and orientation comprises the following steps:

- describing of a three-dimensional orientation of the object by unit quaternions,
- inducing a probability density function on the unit quaternions by central projection of a Gaussian distribution on a tangent space to the sphere of the unit quaternions,
- forming of base elements describing a correlation of position and orientation by generating a joint probability on a product space of said tangent space and a space of translations, and
- combining said base elements to mixture probability distributions.

The basic idea is to use unit quaternions to represent rotations in 3D. The base element of a probability distribution over the rigid transforms is a Gaussian in the 6D tangent space, characterized by the tangent point to the unit quaternions and the mean and the covariance of the distribution. Such a base element is called a Projected Gaussian. Mixtures of Projected Gaussians are used to reach the necessary expressive power of the framework.

As a parameterization of the orientation part of a pose unit quaternions are used. They have some especially advantageous probabilities:

- Every rotation is described by exactly two quaternions, which only differ by their sign (i.e. by a factor of -1) - which is almost as good as unique.
- Only four scalar parameters are used, which is close to minimal. Locally, only the minimal number of three parameters is used.

- Concatenation of rotations (which is equivalent to describing one orientation with regard to another orientation) is expressed by a multiplication of the corresponding quaternions.
- The representation is free of singularities.
- Distances and areas in the parameter space are maintained under rotation and translation.
- The unit sphere of quaternions lends itself easily to the definition of probability density functions.

As the base element of the set of possible probability density functions on the space of rotations a projected Gaussian distribution is selected. This means a tangent point on the unit sphere of Quaternions is selected, then a Gaussian distribution on the corresponding three-dimensional tangent space is chosen, and finally the value that is taken from the tangent space to the sphere by means of a central projection is derived as the raw value of the probability distribution function on the sphere. These raw values can be normalized so that their integral over the sphere gives 1.

The correlation between the orientation and the position in a pose is then modeled by using a Gaussian distribution over the six-dimensional product space of the tangent space and three dimensional space describing the position. The values in the covariance matrix off the 3x3 diagonal submatrices capture the correlation. By projecting the orientation part of this six dimensional Gaussian to the unit quaternions, the base element for the mixture distributions is obtained.

A single one of these base elements is well suited to describe the pose if its probability mass is more or less concentrated at one point or, in other words, is already pretty well known. If a larger uncertainty needs to be represented, the corresponding probability density function can be described by using a special linear combination of such base elements, i.e. one where the coefficients all assume values between 0 and 1 (included) and add up to 1.

The memory space requirements of the inventive method to model the possible poses are significantly lower than those of a sample based description. Information derived from various sources can be fused, i.e. from two mutually independent, but imprecise pieces of information a more precise information can be derived. Furthermore, the uncertainties can be propagated. For example, if uncertain information about the position and orientation of an object with respect to a camera is described as well as uncertain information about the position and orientation of the camera with respect to the world, the resulting uncertain information about the position and orientation of the object with respect to the world can be derived in a fast and precise manner.

In a preferred embodiment a translation of an object is described by a three-dimensional vector. Alternatively a translation can be described by a purely imaginary quaternion and the poses of an object are then represented as dual quaternions. Dual quaternions are well qualified to obtain a concise algebraic description of rigid transforms and their composition.

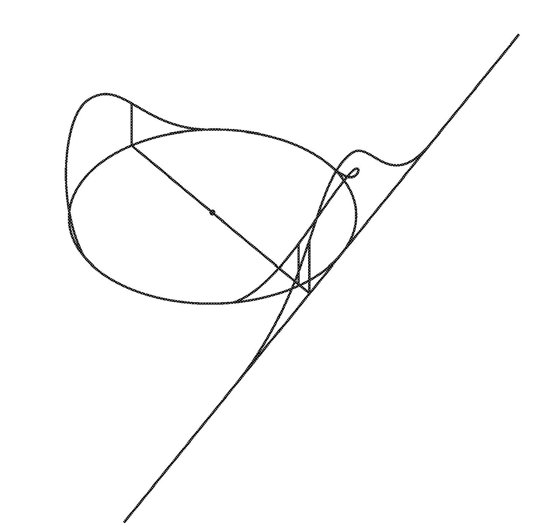

A preferred embodiment of the invention will now be described with reference to figure 1, which shows a projection of a Gaussian distribution defined on a tangent space onto the sphere of unit quaternions for the example of a 1-dimensional unit sphere in $R^2$.

The quaternion as such is sufficiently well known to a person skilled in the art. In order to clarify the notation, at first some basics are restated.

Let H be the quaternions, i.e. $H = \{q | q = a + ib + jc + kd\}$, where a is the real part of the quaternion, and the vector $v = (b,c,d)$ is the imaginary part. The imaginary units $\{i,j,k\}$ have the properties $i^2 = j^2 = k^2 = ijk = -1$, $ij = k$, $jk = i$, $ki = j$. The quaternions can be identified with $R^4$ via the coefficients, $q = a + ib + jc + kd \sim (a,b,c,d)$. The norm of a quaternion is defined as $\|q\|^2 = a^2+b^2+c^2+d^2$, the conjugate of a quaternion as $q^* = a - ib - jc - kd$. With the above properties of quaternions we have $\|q\|^2 = q^*q^*$.

Analogously to the way that unit complex numbers $z = \cos(\phi) + i\sin(\phi) = e^{i\phi}$ represent rotations in 2D via the formula $p_{rot} = zp$ for any point $p \in \breve{A}$, unit quaternions represent rotations in 3D. A point $(p_1, p_2, p_3)$ in 3D is represented as the purely imaginary quaternion $p = ip_1 + jp_2 + kp_3$; a rotation around the unit 3D axis $v$ by the rotation angle $\theta$ is given by the quaternion $q = \cos(\theta/2)+\sin(\theta/2)(iv_1 + jv_2 + kv_3)$.

The rotated point is obtained as $p_{rot} = q^*p^*q^*$. Clearly, q and -q represent the same rotation, so the set $U$ of unit quaternions is a double coverage of the special orthogonal group SO(3) of rotations in 3D.

The set $U$ of unit quaternions is identified with the 3-dimensional unit sphere $S_3$ in $R^4$, and probability density functions on $U$ are defined by probability density functions on $S_3$.

For a sufficiently expressive set of probability density functions on the rotations a mixture of base elements is chosen. Each base element is obtained by projecting a Gaussian distribution defined on a tangent space onto the sphere of unit quaternions. This technique is illustrated in Figure 1 for the example of a 1-dimensional unit sphere in $R^2$. Note that the peaks are lower due to renormalization.

Definition 1: Let $S_3$ be the 3-dimensional unit sphere in $R^4$ and $r_0$ be an arbitrary point on $S_3$. Further, let $T(r_0)$ $\sim R^3$ be the 3-dimensional tangent space to the sphere $S_3$ at the point $r_0$, with a local coordinate system that has the

point $q_0$ as origin. Further, let $\mathcal{N}$ $(\mu,\Sigma)$ be a Gaussian distribution on $T_R(r_0)$ and the corresponding probability density function be $p_T$. With the 2-valued central projection $\Pi_{r_0} : T_R(r_0) \to S_3$ (Figure 1 illustrates how a probability density function is induced on the unit sphere $S_1 \subset R^2$). A density function is given on $S_3$ by

$$p_S(r) := \frac{1}{C} p_T(\Pi_{r_0}^{-1}(r))$$ with $C = \int_S p_T(\Pi_{r_0}^{-1}(r))dr$. The set of these pdfs $p_s$ is called set of Rotational Projected Gaussians or RPG. The subset of pdfs for which $\mu = 0$ in the corresponding Gaussian on the tangent space $T_R$ is denoted as $RPG_0$. Note that this definition is not valid for points $r^\perp \in S_3$ that are orthogonal to $r_0$ . $p_s(r^\perp) := 0$ is the continuous completion.

In practice, the RPG is represented by its tangent point and the basis of the tangent space, and by the parameters of the corresponding Gaussian distribution: $p_S \sim \mathcal{N}$ $(T_R(r_0),\mu,\Sigma)$. Note that the same distribution can be represented by RPGs with antipodal tangent points.

The pose uncertainty is modeled along the lines of the rotation uncertainty by including the translation.

Definition 2: Let SE(3) be the group of rigid transforms in C, the rotation represented by a unit quaternion or equivalently a point on $S_3$ and the translation by a vector in $R^3$, $SE(3) \sim S_3 \times R^3$. Let $x = (r_0,t)$ be a transform (or pose), with rotation $r_0$ and translation $t$. The tangent space to $x$ is given by $T(r_0):=:T_R(r_0)\times R^3 \sim R^6$, where $T_R(r_0) \sim R^3$ is the tangent space to the rotation part. Let $\mathcal{N}(\mu,\Sigma)$ be a Gaussian distribution on $T_R(r_0)$. With the 2-valued mapping

$$\Pi_{(r_0,t)} : T(r_0) \to S_3 \times R^3,$$

$$\Pi_{(r_0,t)}(y_1,y_2,y_3,y_4,y_5,y_6) = (\Pi_{(r_0)}(y_1,y_2,y_3),(y_4,y_5,y_6))$$

a density function is given on $S_3 \times R^3$ by $p(r,t) := \frac{1}{C} p(\Pi_{(r_0,t)}^{-1}(r,t))$

with $C = \int_{S_3 \times R^3} p(\Pi_{(r_0,t)}^{-1}(r,t))drdt$. The set of these pdfs $p$ is called set of Projected Gaussians or PG. The subset of pdfs for which $\mu_1 = \mu_2 = \mu_3 = 0$ in the corresponding Gaussian on the tangent space is referenced as $PG_0$.

Note that $S_3 \times R^3$ is a double coverage of SE(3) in the same way that $S_3$ is a double coverage of SO(3). Note also that the origin is not shifted with respect to the position part of the pose. Again, in practice the PG is represented by the tangent space as $p \sim \mathcal{N}$ $(T(r_0),\mu,\Sigma)$.

In analogy to the fusion of Gaussian pdfs pertaining to the same phenomenon, now the fusion of two PGs will be described. The approach is to find a common tangent space that can represent both of the original PGs reasonably well. A detailed analysis based on the approximation theory of the MPG (Mixtures of Projected Gaussians) framework would exceed the scope of this paper - a valid heuristic for $PG_0$ type distributions is to fuse PGs if the angle between the tangent points is less than 15 ˚, or, equivalently, larger than 165˚. Below the fusion process for PG in general is described, in particular $PG_0$ can be used.

Let $p_1 \sim \mathcal{N}(T(r_{0,1}),\mu_1,\Sigma_1)$ and $p_1 \sim \mathcal{N}(T(r_{0,2}),\mu_2,\Sigma_2)$ be two pose pdfs with $\cos(r_{0,1} \cdot r_{0,2}) \geq 0.966$ (if $\cos(r_{0,1} \cdot r_{0,2}) \leq -0.966$, use $-r_{0,2}$ instead of $r_{0,2}$, the rest is unchanged).

1. Select

$$r_{0,3} = \frac{1}{\|r_{0,1} + r_{0,2}\|}(r_{0,1} + r_{0,2})$$

as the first tangent point for a common tangent space $T(r_{0,3})$. The basis of the space can be selected arbitrarily, in particular a random basis can be used.

2. Restate $p_1$ in $T(r_{0,3})$: We define the transfer function $f_{1,3} : T(r_{0,1}) \to T(r_{0,3})$ by $f_{1,3}(y) := \Pi_{(r_{0,3},t)}^{-1}(\Pi_{(r_{0,1},t)}(y))$ and the Jacobian of this transfer function at the mean value $\mu_1$ of the original distribution

$$p_1 : J_{1,3} = \left. \frac{\partial f_{1,3}}{\partial y} \right|_{\mu 1} .$$

The statistical moments of the distribution $p_1$ represented in $T(r_{0,3})$ are then estimated as $\mu_{3,1} = f_{1,3}(\mu_1)$ and $\Sigma_{3,1} = J_{1,3} \cdot \Sigma_1 \cdot J_{1,3}^T$, so $p_{3,1} \sim \mathcal{N}(T(r_{0,3}),\mu_{3,1},\Sigma_{3,1})$.

3. Restate $p_1$ in $T(r_{0,3})$ as $p_{3,2} \sim \mathcal{N}(T(r_{0,3}),\mu_{3,2},\Sigma_{3,2})$. Note that while this is technically well defined even for large angle difference and wide spread distributions, it only makes sense for rather small angle differences and concentrated distributions. If wide distributions are needed, mixtures can be used, as described later.

4. Fuse $p_{3,1}$ and $p_{3,2}$. These pdfs are now stated in the same $R^6$, so the fused pdf is $p_3 \sim \mathcal{N}(T(r_{0,3}),\mu_3,\Sigma_3,)$, with the parameters $\Sigma_3 = (\Sigma_{3,1}^{-1} + \Sigma_{3,2}^{-1})^{-1}$ and $\mu_3 = (\Sigma_{3,1} + \Sigma_{3,2})^{-1} \cdot (\Sigma_{3,2} \cdot \mu_{3,1} + \Sigma_{3,1} \cdot \mu_{3,2})$. The resulting probability density function on $S_3 \times R^3$ needs to be normalized according to definition 2.

5. Generally, $\mu_3 \neq 0$. Since it is advantageous to refrain to base elements of type $PG_0$, $p_3$ is restated according to step 2, with the new tangent point $r_{0,4} = \Pi_{(r_{0,3},t)}(\mu_3)$. Finally, the resulting base element is renormalized.

It is required to model uncertain transforms of uncertain poses, for example if a sensor is mounted on a mobile robot and the pose estimate is needed in world coordinates. In the framework according the invention, transforms and poses are represented as dual quaternions in order to calculate the probability distribution function of the composition (see Goddard, J.S.: "Pose and Motion Estimation from Vision using Dual Quaternion-based Extended Kalman Filtering", PhD Dissertation, University of Tennessee, Knoxville 1997, for more detail.

A dual quaternion $\mathbf{q_1} = q_{1,1} + eq_{1,2}$ is composed of two quaternions $\mathbf{q_1}$ and $\mathbf{q_2}$ and the dual number e, with $e \cdot e = 0$. Summation of dual quaternions is per component,

$$\mathbf{q_1} + \mathbf{q_2} = (q_{1,1}+eq_{1,2}) + (q_{2,1}+eq_{2,2}) = (q_{1,1}+q_{2,1}) + e(q_{1,2}+eq_{2,2})$$

The product of dual quaternions is

$$\mathbf{q_1} * \mathbf{q_2} = (q_{1,1}+eq_{1,2}) * (q_{2,1}+eq_{2,2}) = (q_{1,1}*q_{2,1}) + e(q_{1,2}*q_{2,1} + q_{1,1}*q_{2,2}) .$$

The conjugate of a dual quaternion is $\mathbf{q}^* = q_1^* + eq_1^*$.
Let $q_r$ be the rotation unit quaternion, and $q_t = [0,t_1,t_2,t_3]$ be the quaternion derived from the translation components, then the dual quaternion $\mathbf{q} = q_r + e0.5q_t^*q_r$ represents the transform. A point $(p_1,p_2,p_3)$ is embedded into the dual quaternions as $\mathbf{p} = [1,0,0,0] + e[0,p_1,p_2,p_3]$, and with this convention the rotation and translation is $\mathbf{q} * \mathbf{p} * \mathbf{q}^*$. The composition of two transforms, or of a transform and a pose, is represented by the product of the dual quaternions,

$$\hat{p} = \mathbf{q_2} * \mathbf{q_1} * \mathbf{p} * \mathbf{q_1}^* * \mathbf{q_2}^* = \mathbf{q_2} * \mathbf{q_1} * \mathbf{p} * (\mathbf{q_2} + \mathbf{q_1})^* .$$

The composition function g will be used to derive the covariance:

$$\mathbf{q_3} \;=\; g(\mathbf{q_1},\mathbf{q_2}) \;=\; g_T(y_1, y_2),$$

where the $y_i$ are the 6-dimensional vectors on the corresponding tangent spaces, and $g$ and *gf* are related via the central projections $\Pi_{(r_{0,1},t)}$ and $\Pi_{(r_{0,2},t)}$.

This algebraic formulation justifies to set the tangent point of the composed base element to $r_{0,3} = r_{0,2} * r_{0,1}$, which for $PG_0$ is also the mean value. For base elements in $PG \backslash PG_0$, the mean values in the describing pdfs need to be projected to $S_3 \times R^3$, then propagated and projected back to the tangent space.

The Jacobian of gT is used to derive the covariance matrix of the base element describing the composition. With

$$J_C = \left.\frac{\partial g_T}{\partial(y_1, y_2)}\right|_{(0,0)} \quad \text{and} \quad \Sigma_C = \begin{pmatrix} \Sigma_1 & 0 \\ 0 & \Sigma_2 \end{pmatrix}$$

As stated above, a precondition for the fusion PG base elements is that their tangent points are sufficiently close to each other and that they are sufficiently well concentrated. For this reason, widely spread probability density functions should not be modeled in a single base element.

Instead, a mixture of PG or $PG_0$ base elements can be used. Thus let $p_i \in PG$ or $p_i \in PG_0$ be base elements, then the set of Mixtures of Projected Gaussians MPG or Mixtures of Projected Gaussians with zero mean $MPG_0$ is defined as

$$\left\{ p_m = \frac{1}{n}\Sigma_{i=1}^{n}\pi_i p_i \Big| 0 \le \pi_i \le 1, \Sigma_{i=1}^{n}\pi_i = 1 \right\} .$$

The techniques of fusion and composition carry over to mixtures in a similar way they work for mixtures of Gaussians (see Eidenberger,R. et al.: "Fast Parametric Viewpoint Estimation for Active Object Detection", Proceeding of the IEEE International Conference on Multisensor of Fusion and Integration for Intelligent Systems (MF|2008), Seoul, Korea, 2008).

Let

$$p_{m,1}, p_{m,2} \in MPG, \; p_{m,1} = \frac{1}{n}\Sigma_{i=1}^{n}\pi_{1,i}p_{1,i}, \; p_{m,2} = \Sigma_{j=1}^{l}\pi_{2,j}p_{2,j} .$$

The base elements of the fused mixture are obtained from fusing the base elements of the original mixtures:

$$p_{m,3} = f(p_{m,1}, p_{m,2}) = C \cdot \Sigma_{i,j=1}^{n,l}\lambda_{i,j} \cdot \pi_{1,i} \cdot \pi_{2,j} \cdot f(p_{1,i}, p_{2,j}),$$

with a normalizing constant $C = (\Sigma_{i,j=1}^{n,l}\lambda_{i,j} \cdot \pi_{1,i} \cdot \pi_{2,j})^{-1}$ . The weights $\pi_{1,i}$ and $\pi_{2,j}$ are those of the prior mixture.

The plausibility is composed of two factors, $\lambda_{i,j} = \alpha_{i,j} \cdot \delta_{i,j}$. The factor $\alpha_{i,j} = e^{-a\arccos((r_{0,2,i} \cdot r_{0,2,j})^2)}$ says whether the mixture elements can share a tangent space and thus probably pertain to the same cases in the mixture. The angle distance is controlled by the factor a. Plausible results were obtained with a=5.

The factor $\delta_{i,j} = (\mu_{3,1,i} - \mu_{3,2,j}) \cdot (\Sigma_{3,1,i} + \Sigma_{3,2,j})^{-1} \cdot (\mu_{3,1,i} - \mu_{3,2,j})^T$ is the Mahalanobis distance of the mean values and covariances transported to the common tangent space. It expresses that even if the mixture elements could share a tangent space, they could still not be compatible.

The composition carries over in a similar manner.

$$p_{m,3} = g(p_{m,1}, p_{m,2}) = C \cdot \Sigma_{i,j=1}^{n,l}\pi_{1,i} \cdot \pi_{2,j} \cdot g(p_{1,i}, p_{2,j}),$$

with $C = (\sum_{i,j=1}^{n,l} \pi_{1,i} \cdot \pi_{2,j})^{-1}$. In this case, there is no question of whether two base elements could apply at the same time, since the two probability distributions are assumed to be independent, so the factor $\lambda_{i,j}$ is omitted.

Note that in both cases the individually fused or combined resulting base elements are assumed to be renormalized.

The prsent invention presents a framework of Mixtures of Projected Gaussians that allows for modeling a large variety of possible probability distribution functions of 6D poses. In contrast to a particle filter approach, much fewer parameters are needed to describe the distribution. Like particle filter approaches, it allows for classical probabilistic inference rules like the Bayes update.

The MPG representation of probability density functions can be part of an overall architecture for robotic perception. In this larger framework particle filter representations can also be used. The probability density models can be transformed between the different representation forms. In particular, rejection sampling can be used in order to sample from MPG distributions to obtain particle sets, and a variant of the EM algorithm can be used in order to estimate MPG parameters from sample sets.

The operations of fusion, propagation or multiplication of MPG distributions generally result in a large number of mixture elements. However, many of them have practically zero weight, while others are approximately identical. The approach for identifying doublettes described in Eidenberger,R. et al.: "Fast Parametric Viewpoint Estimation for Active Object Detection", Proceeding of the IEEE International Conference on Multisensor of Fusion and Integration for Intelligent Systems (MF|2008), Seoul, Korea, 2008, will be earned over to the MPG. Similar components are merged, negligible ones are omitted and the weights are renormalized.

The covariance matrices are can be estimated using the Jacobian of the nonlinear transforms. These estimates could be improved by using the unscented estimation technique (see Julier, S.J., Uhlmann, J.K.:"Unscented Filtering and Nonlinear Estimation", In Proceeding of the IEEE, Vol. 92, No. 3, pp. 401-422, March 2004).

The description of the invention was focussed on the perception of static objects. The MPG framework can be extended to the dynamic case as well.

The inventive method is usable for a number of products:

- mobile robots, e.g. fork lift trucks for industrial use
- estimation of position, orientation and (with some extensions) shape of inner organs from CT images (health)
- logistics equipment like cranes, cradle carriers, luggage handling robots etc.
- service robots for everyday environments
- mineralogical investigations and explorations for oil or gas (energy)

## Claims

1. A method for modelling and calculation of the uncertainty of a pose of an object in space, wherein pose is a combination of translation and orientation, comprising the following steps:

    - describing of a three-dimensional orientation of the object by unit quaternions,
    - inducing a probability density function on the unit quaternions by central projection of a Gaussian distribution on a tangent space to the sphere of the unit quaternions,
    - forming of base elements describing a correlation of position and orientation by generating a joint probability on a product space of said tangent space and a space of translations, and
    - combining said base elements to mixture probability distributions.

2. A method according to claim 1,
   wherein a translation is described by a three-dimensional vector.

3. A method according to claim 1,
   wherein a translation is described by a purely imaginary quaternion and the poses of an object are represented as dual quaternions.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **Stuelpnagel, J.** On the Parametrization of the Three-Dimensional Rotation Group. *SIAM Review,* 1964, vol. 6 (4), 422-430
- **Choe, S.B.** Statistical Analysis of Orientation Trajectories via Quaternions with Applications to Human Motion. *PhD Dissertation,* 2006
- **Goddard, J.S.** Pose and Motion Estimation from Vision using Dual Quaternion-based Extended Kalman Filtering. *PhD Dissertation,* 1997
- **Abidi, M.A. ; Goddard J.S.** Pose and Motion Estimation from Vision using Dual Quaternion-based Extended Kalman Filtering. *Proc. of SPIE Conf. on Three-Dimensional Image Capture and Applications,* January 1998, vol. 3313, 189-200
- **Kavan, L. et al.** Dual Quaternions for Rigid Transformation Blending. *Technical Report,* 2006
- **Antone, M.E.** Robust Camera Pose Recovery Using Stochastic Geometry. *PhD Dissertation,* 2001
- Bingham statistics. **Love, J.J.** Encyclopedia of Geomagnetism and Paleomagnetism. Springer, 2007, 45-47
- **Mardia, K.V. et al.** Protein Bioinformatics and Mixtures of Bivariate von Mises Distributions for Angular Data. *Biometrics,* 2007, vol. 63 (2), 505-512
- **Kraft, E.** A Quaternion-based Unscented Kalman Filter for Orientation Tracking. *Proceedings of the Sixth International Conference of Information Fusion,* 2003, vol. 1, 47-54
- **Eidenberger,R. et al.** Fast Parametric Viewpoint Estimation for Active Object Detection. *Proceeding of the IEEE International Conference on Multisensor of Fusion and Integration for Intelligent Systems (MF|2008),* 2008
- **Julier, S.J. ; Uhlmann, J.K.** Unscented Filtering and Nonlinear Estimation. *Proceeding of the IEEE,* March 2004, vol. 92 (3), 401-422